# EUROPÄISCHE PATENTSCHRIFT

(11) **EP 2 306 425 B1**
(45) Veröffentlichungstag und Bekanntmachung des Hinweises auf die Patenterteilung: **03.08.2011**
(21) Anmeldenummer: 09450186.3
(22) Anmeldetag: 01.10.2009
(51) Int. Cl.: G08G 1/015, G08G 1/04

(54) **Vorrichtung und Verfahren zur Detektion von Radachsen**
Device and method for detecting wheel axles
Dispositif et procédé destinés à la détection d'axes de roue

(43) Veröffentlichungstag der Anmeldung: 06.04.2011
(73) Patentinhaber: Kapsch TrafficCom AG, 1120 Wien (AT)
(72) Erfinder: Nagy, Oliver, 1190 Wien (AT)
(74) Vertreter: Weiser, Andreas

(56) Entgegenhaltungen:
- WO-A1-2005/017853
- WO-A1-2007/134632
- US-A- 5 821 879
- US-A1- 2003 189 500

## Beschreibung

Die vorliegende Erfindung betrifft eine Vorrichtung und ein Verfahren zur Detektion von Radachsen eines Fahrzeugs auf einer Fahrbahn.

Das Detektieren von Fahrzeugradachsen ist bei zahlreichen Anwendungen von Interesse. So kann aus dem Erkennen einer Radachse mit Sicherheit das Befahren einer bestimmten Verkehrsfläche erkannt werden, beispielsweise zur Grenzüberwachung oder zur Auslösung bestimmter Aktionen, wie das Auslösen eines Alarms, Einschalten einer Beleuchtung, Öffnen eines Schrankens, Aufnehmen eines Fotos zu Überwachungszwecken usw. Auch moderne Verkehrsgebührensysteme stellen häufig zur Gebührenbemessung auf die Achsanzahl von Fahrzeugen ab, sodaß das Detektieren von Radachsen auch eine wichtige Grundlage für Straßenmaut- oder Parkgebührensysteme sein kann.

Zur Radachsdetektion werden derzeit verschiedenste Systeme eingesetzt, wie in die Fahrbahn eingebettete Induktionsschleifen, Lichtschranken knapp oberhalb der Fahrbahn oder Radar- bzw. Laserscanner über der Fahrbahn, welche im Zuge der Fahrzeugkonturerkennung auch Radachsen detektieren. Allen bekannten Systemen ist gemeinsam, daß sie überaus aufwendig sind: Induktionsschleifen erfordern ein Öffnen der Fahrbahnoberfläche, Lichtschranken benötigen Installationen an beiden Fahrbahnrändern und Versagen bei Straßen mit mehreren Fahrbahnen, und Radar- bzw. Laserscanner sind konstruktiv aufwendig und kostspielig.

Solche Systeme sind zum Beispiel in US2003/0189500, W02005/017853 oder in US5821879 zu finden.

Darüberhinaus sind Sensoren, die nach dem Lichtschnitt-Verfahren arbeiten, zur Erfassung von Unregelmassigkeiten an einem Messobjekt bekannt, siehe WO2007/134632.

Die Erfindung setzt sich zum Ziel, Vorrichtungen und Verfahren zur Detektion von Radachsen zu schaffen, welche einfacher realisierbar sind als die bekannten Lösungen.

Dieses Ziel wird in einem ersten Aspekt der Erfindung mit einer Vorrichtung erreicht, die sich durch einen nach dem Lichtschnitt-Verfahren arbeitenden Sensor auszeichnet, der von einem ersten Ort entlang der Fahrbahn zumindest einen Lichtfächer abstrahlt, um einen Lichtstrich auf die Fahrbahn und ein allfällig darauf befindliches Fahrzeug zu projizieren, und diesen Lichtstrich von einem vom ersten Ort beabstandeten zweiten Ort entlang derselben Fahrbahnseite aus aufnimmt und eine Radachse detektiert, sobald der aufgenommene Lichtstrich in seinem von der genannten Fahrbahnseite ausgehenden Verlauf eine von seinem Verlauf bei leerer Fahrbahn abweichende versetzungslose Richtungsänderung zeigt.

Auf diese Weise wird erstmals das in Technik bekannte Lichtschnitt-Verfahren zur Radachsendetektion herangezogen. Beim Lichtschnitt-Verfahren wird ein unter einem ersten Winkel auf ein Oberflächenrelief projizierter Lichtstrich unter einem davon abweichenden zweiten Winkel betrachtet und zeichnet damit das Oberflächenrelief in einem Schnitt ("Licht-Schnitt") nach, was hier zu einer besonders einfachen Radachsendetektion ausgenützt wird: Befindet sich kein Fahrzeug auf der Fahrbahn, zeigt das Bild des Lichtstrichs einen weitgehend kontinuierlichen Strich; befindet sich ein Fahrzeug auf der Fahrbahn, dessen Radauflagepunkte (und damit Radachsen) auf der Fahrbahn gerade vom Lichtstrich getroffen werden, erfährt der Lichtstrich in der Bildaufnahme eine Richtungsänderung (erscheint "geknickt"); befindet sich hingegen ein Fahrzeug auf der Fahrbahn, dessen Radauflagepunkte (und damit Radachsen) gerade nicht am Ort des Lichtstrichs sind, so daß der seitlich einfallende Lichtstrich zumindest teilweise unter das Fahrzeug leuchtet, erscheint das Bild des Lichtstrichs in der Aufnahme versetzt geknickt, d.h. erfährt am Ort seiner Richtungsänderung auch einen Versatz. Es braucht daher lediglich der Verlauf eines einzigen Lichtstrichs in einer Bildaufnahme auf dieses Kriterium hin überwacht werden, um Radachsen zu detektieren, was mit sehr einfachen Bildverarbeitungsmitteln möglich ist. Die Vorrichtung der Erfindung erfordert keinerlei Einbauten in der Fahrbahn, kann auf lediglich einer einzigen Seite der Fahrbahn montiert werden und benötigt im Vergleich zu Radar- oder Laserscananlagen nur sehr einfache Lichtprojektions-, Kamera- und Bildverarbeitungsmittel.

Bevorzugt umfaßt der Sensor einen Lichtprojektor am ersten Ort und eine davon gesondert aufgestellte Kamera am zweiten Ort, womit ein ausreichender Winkelunterschied zwischen Projektions- und Aufnahmerichtung erzeugt werden kann.

Besonders günstig ist es, wenn der Lichtprojektor ein Laser- oder Leuchtdiodenstrahler ist, wodurch hohe Leuchtdichten erzielt werden können.

Bevorzugt arbeitet der Lichtprojektor in einem schmalbandigen Lichtfrequenzbereich, besonders bevorzugt im Infrarot- oder Ultraviolettbereich.

Die Erfindung eröffnet insbesondere auch die Möglichkeit, als Kamera eine bereits vorhandene Verkehrsüberwachungskamera einzusetzen, was den konstruktiven Aufwand weiter reduziert.

Gemäß einer weiteren vorteilhaften Variante der Erfindung kann vorgesehen werden, daß der Sensor mehrere parallele Lichtstriche projiziert und aufnimmt, um mehrere Radachsen gleichzeitig zu detektieren. Dadurch können beispielsweise auch an stehenden Fahrzeugen Radachsen detektiert werden, oder sich auf der Fahrbahn aufeinanderfolgend bewegende Radachsen eines oder mehrerer Fahrzeuge in einem einzigen Schritt detektiert werden.

An dieser Stelle sei darauf hingewiesen, daß der Winkel des oder der Lichtstriche zur Fahrbahn variabel gewählt werden kann. Kombinationen aus mehreren Lichtstrichen, die keinen parallelen Verlauf haben, sind ebenso denkbar.

Falls gewünscht, kann der Sensor zusätzlich gitterförmig gekreuzte Lichtstriche projizieren und aufnehmen, um daraus in an sich bekannter Weise die gesamte Oberflächenkontur eines Fahrzeugs zu ermitteln. Dadurch kann beispielsweise auch eine Fahrzeugklassifizierung zu Überwachungs- oder Vermautungszwekken durchgeführt werden.

In einem zweiten Aspekt erreicht die Erfindung ihre Ziele mit einem Verfahren, das die folgenden Schritte aufweist:
Projizieren zumindest eines Lichtfächers von einem ersten Ort entlang der Fahrbahn aus, um einen Lichtstrich auf die Fahrbahn und ein allfällig darauf befindliches Fahrzeug zu projizieren,
Aufnehmen des Lichtstrichs von einem vom ersten Ort beabstandeten zweiten Ort entlang derselben Fahrbahnseite aus, und
Detektieren einer Radachse, sobald der aufgenommene Lichtstrich in seinem von der genannten Fahrbahnseite ausgehenden Verlauf eine von seinem Verlauf bei leerer Fahrbahn abweichende versetzungslose Richtungsänderung zeigt.

Dabei ist es sowohl möglich, daß der Lichtfächer steht und das Fahrzeug bewegt wird, als auch daß das Fahrzeug steht und der Lichtfächer bewegt wird.

Hinsichtlich der Vorteile und weiterer Merkmale des erfindungsgemäßen Verfahrens wird auf die obenstehenden Ausführungen zur Vorrichtung verwiesen.

Die Erfindung wird nachstehend anhand eines in den beigeschlossenen Zeichnungen dargestellten Ausführungsbeispiels näher erläutert. In den Zeichnungen zeigen:
die Fig. 1 bis 3 die Vorrichtung und das Verfahren der Erfindung bei der Passage eines Fahrzeugs auf einer Fahrbahn in drei verschiedenen Phasen;
Fig. 4 eine zweite Ausführungsform der Erfindung für mehrere nebeneinanderliegende Fahrbahnen;
Fig. 5 eine dritte Ausführungsform der Erfindung unter Verwendung einer Lichtfransenprojektion; und
Fig. 6 eine vierte Ausführungsform der Erfindung unter Verwendung einer Lichtgitterprojektion.

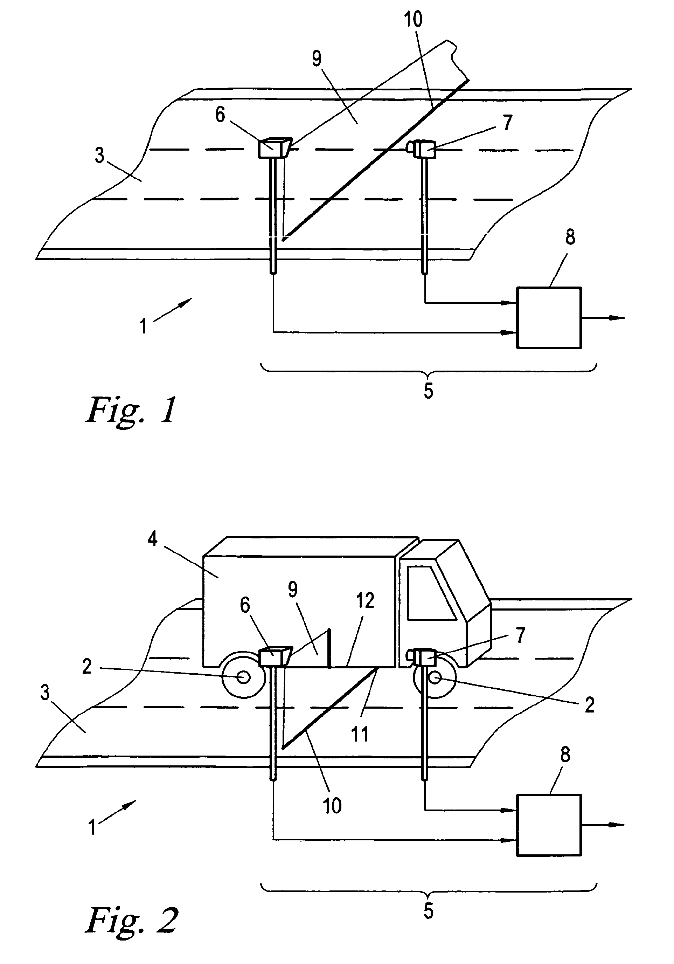

In den Fig. 1 bis 3 ist eine Vorrichtung 1 zur Detektion von Radachsen 2 eines auf einer Fahrbahn 3 fahrenden Fahrzeugs 4 gezeigt. Die Vorrichtung 1 weist einen nach dem Lichtschnitt-Verfahren arbeitenden Sensor 5 auf, der am Fahrbahnrand oder oberhalb der Fahrbahn 3 angeordnet ist und einen Lichtprojektor 6, eine Kamera 7 und eine daran angeschlossene Auswerteeinrichtung 8 umfaßt.

Das Fahrzeug 4 kann beliebiger Art sein, auch ein Verbund aus einem Zugfahrzeug und einem Anhänger fällt unter den hier verwendeten Begriff "Fahrzeug". Die Vorrichtung 1 kann sowohl stationär als auch portabel ausgeführt sein.

Der Lichtprojektor 6 projiziert von einem ersten Ort seitlich und oberhalb der Fahrbahn 3 mittels eines Lichtfächers 9 einen Lichtstrich 10 auf die Oberfläche der Fahrbahn 3. Die Kamera 7 blickt von einem zweiten Ort entlang derselben Seite der Fahrbahn 3, d.h. von einem Ort, der jedenfalls nicht in der Ebene des Lichtfächers 9 liegt, z.B. seitlich und oberhalb der Fahrbahn 3 und in Fahrbahnlängsrichtung vom ersten Ort beabstandet, auf die Fahrbahnoberfläche, um ein Bild des Lichtstrichs 10 unter einem anderen Winkel als dem Projektionswinkel aufzunehmen. Bei leerer Fahrbahn 3 ist das von der Kamera 7 aufgenommene Bild des Lichtstrichs 10 ein kontinuierlicher Strich (Fig. 1).

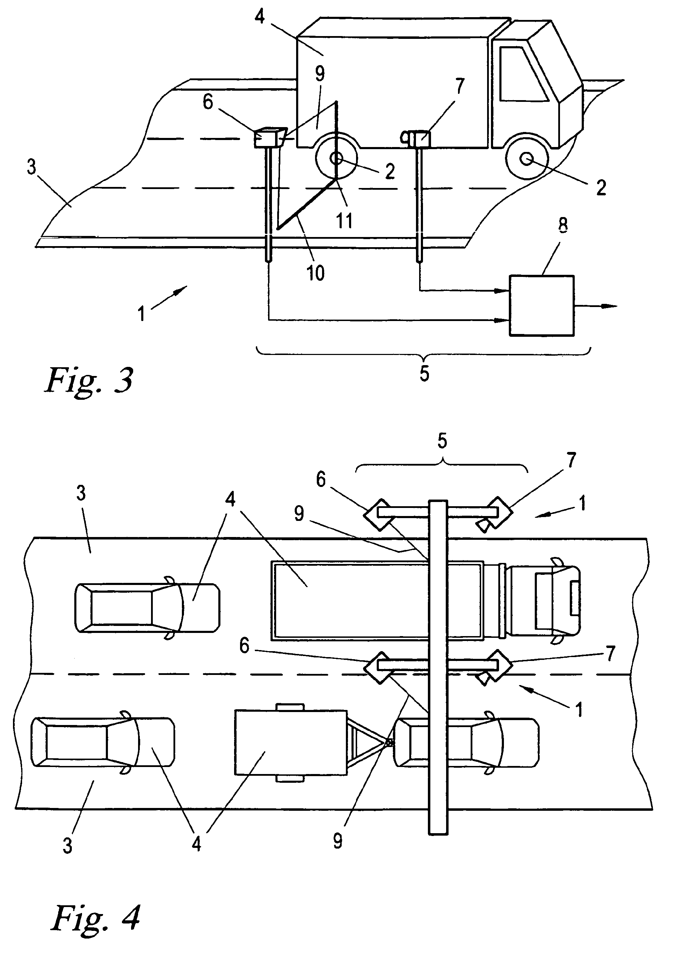

Wenn ein Fahrzeug 4 den Sensor 5 passiert, erscheint der Lichtstrich 10 in dem von der Kamera 7 aufgenommenen Bild unterschiedlich "geknickt", und zwar je nachdem, ob der Lichtfächer 9 das Fahrzeug 4 neben (Fig. 2) oder am Ort einer Radachse 2 trifft (Fig. 3): Am Ort einer Radachse 2 zeigt das Bild des Lichtstrichs 10 - in seinem Verlauf von der Fahrbahnseite des Sensors 5 aus gesehen - eine "versetzungslose" Richtungsänderung 11, siehe Fig. 3, wogegen der Lichtstrich 10 neben den Radachsen 2 - aufgrund der schrägen Anstrahlung des Fahrzeugs 4 durch den Lichtprojektor 6 - ein Stück unter das Fahrzeug 4 leuchtet. Dadurch zeigt das Bild des Lichtstrichs 10 am Ort der Richtungsänderung gleichzeitig eine Versetzung (Versatz) 12, siehe Fig. 2.

Diese Strichformen können in dem von der Kamera 7 aufgenommenen Bild von der Auswerteeinrichtung 8 mit verhältnismäβig einfachen Bildverarbeitungsmitteln detektiert und als Kriterium für das Auftreten einer Radachse 2 herangezogen werden: Zeigt das Bild des Lichtstrichs 10 in seinem Verlauf von der Fahrbahnseite des Sensors 5 aus gesehen eine "versetzungslose" Richtungsänderung gemäß Fig. 3, wird dies als Auftreten einer Radachse 2 gewertet.

Als Lichtprojektor 6 kann jede Art von Lichtquelle eingesetzt werden, welche in der Lage ist, ein linienförmiges Licht bzw. einen Lichtfächer 9 auszusenden, z.B. mittels Blenden, Spiegeln, Linsen oder Kombinationen daraus. Besonders eignen sich hiefür Laserdiodenstrahler, deren Licht z.B. mit einer Linse oder Blende aufgefächert wird, oder Strahler, die aus Hochleistungs-Leuchtdiodengruppen zusammengesetzt sind.

Um den Kontrast des vom Lichtprojektor 6 produzierten Lichtstrichs 10 auch bei ungünstigen Umgebungslichtverhältnissen, z.B. direktem Sonnenlicht, zu verbessern, kann der Lichtprojektor 6 optional gepulst mit hoher Impulsspitzenleistung betrieben werden, wobei dann auch die Kamera 7 nur zu den Zeiten der Lichtimpulse des Lichtprojektors 6 betrieben zu werden braucht.

Die Kamera 7 kann eine beliebige Foto- oder Videokamera sein. Bevorzugt wird als Kamera 7 eine bereits an der Fahrbahn 3 vorhandene Verkehrsüberwachungskamera eingesetzt, z.B. eine Kamera einer Straßenmautstation, welche zum Aufnehmen von Mautvergehen bestimmt ist.

Fig. 4 zeigt eine Anwendung der Vorrichtung und des Verfahrens der Fig. 1 bis 3 bei einer Straße, die mehrere Fahrbahnen 3 in Form nebeneinanderliegender Fahrspuren besitzt. Jede der Fahrbahnen 3 besitzt eine eigene Vorrichtung 1, welche außermittig, d.h. etwas seitlich oberhalb der Fahrbahn 3 montiert und dadurch in der Lage ist, einen oder mehrere Lichtfächer 9 von schräg oben auf die Fahrbahnoberfläche und die passierenden Fahrzeuge 4 auszusenden. Damit läßt sich für jede Fahrbahn 3 detektieren, ob der auf der Oberfläche der Fahrbahn 3 auftreffende Lichtstrich 10 durch passierende Radachsen 2 unterbrechungslos geknickt wird oder nicht.

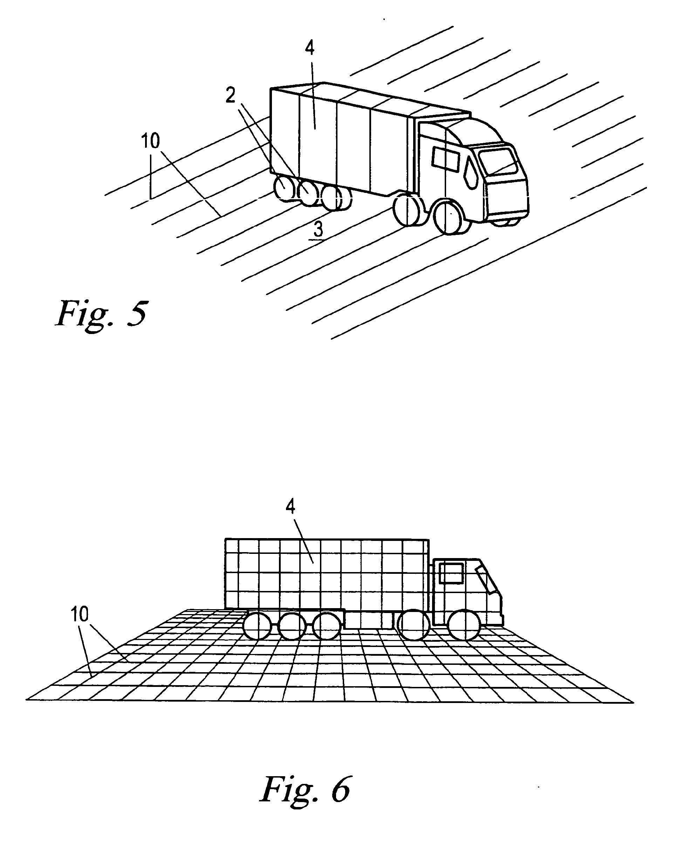

Fig. 5 zeigt eine weitere Ausführungsform mit einem oder mehreren Lichtprojektoren, die mehrere parallele Lichtfächer 9 und damit Lichtstriche 10 auf die Oberfläche der Fahrbahn 3 projizieren können. Dadurch können mehrere Radachsen 2 gleichzeitig mit ein und derselben Kamera detektiert werden. Die Verwendung eines solchen Projektionsmusters aus parallelen Lichtstrichen ist in der Lichtschnitt-Technik auch als Lichtfransenprojektion ("fringe projection") bekannt.

Bei der Variante von Fig. 6 wird anstelle eines Lichtstreifenmusters ein Gitter gekreuzter Lichtstriche 10 projiziert und aufgenommen, wodurch aus den Verzerrungen des Lichtgitters durch die passierenden Fahrzeuge auf die gesamte Oberflächenkontur ("3D-Relief") der Fahrzeuge 4 geschlossen werden kann, wie dem Fachmann bekannt. Die so ermittelte Oberflächenkontur der Fahrzeuge kann beispielsweise zur Klassifizierung der Fahrzeuge herangezogen werden.

Die Erfindung ist nicht auf die dargestellten Ausführungsbeispiele beschränkt, sondern umfaßt alle Varianten und Modifikationen, die in den Rahmen der angeschlossenen Ansprüche fallen.

## Patentansprüche

1. Vorrichtung (1) zur Detektion von Radachsen (2) eines Fahrzeugs (4) auf einer Fahrbahn (3), **gekennzeichnet durch** einen nach dem Lichtschnitt-Verfahren arbeitenden Sensor (5), der von einem ersten Ort entlang der Fahrbahn (3) zumindest einen Lichtfächer (9) abstrahlt, um einen Lichtstrich (10) auf die Fahrbahn (3) und ein allfällig darauf befindliches Fahrzeug (4) zu projizieren, und diesen Lichtstrich (10) von einem vom ersten Ort beabstandeten zweiten Ort entlang derselben Fahrbahnseite aus aufnimmt und eine Radachse (2) detektiert, sobald der aufgenommene Lichtstrich (10) in seinem von der genannten Fahrbahnseite ausgehenden Verlauf eine von seinem Verlauf bei leerer Fahrbahn abweichende versetzungslose Richtungsänderung (11) zeigt.

2. Vorrichtung nach Anspruch 1, **dadurch gekennzeichnet, daß** der Sensor (5) einen Lichtprojektor (6) am ersten Ort und eine davon gesondert aufgestellte Kamera (7) am zweiten Ort umfaßt.

3. Vorrichtung nach Anspruch 2, **dadurch gekennzeichnet, daß** der Lichtprojektor (6) ein Laser- oder Leuchtdiodenstrahler ist, bevorzugt in einem schmalbandigen Lichtfrequenzbereich, besonders bevorzugt im Infrarot- oder Ultraviolettbereich.

4. Vorrichtung nach Anspruch 2 oder 3, **dadurch gekennzeichnet, daß** die Kamera (7) eine Verkehrsüberwachungskamera ist.

5. Vorrichtung nach einem der Ansprüche 1 bis 4, **dadurch gekennzeichnet, daß** der Sensor (5) mehrere parallele Lichtstriche (10) projiziert und aufnimmt, um mehrere Radachsen (2) gleichzeitig zu detektieren.

6. Vorrichtung nach Anspruch 5, **dadurch gekennzeichnet, daß** der Sensor zusätzlich gitterförmig gekreuzte Lichtstriche (10) projiziert und aufnimmt, um daraus in an sich bekannter Weise die Oberflächenkontur des Fahrzeugs (4) zu ermitteln.

7. Verfahren zur Detektion der Radachsen eines Fahrzeugs (4) auf einer Fahrbahn (3), mit den Schritten
Projizieren zumindest eines Lichtfächers (9) von einem ersten Ort entlang der Fahrbahn (3) aus, um einen Lichtstrich (10) auf die Fahrbahn (3) und ein allfällig darauf befindliches Fahrzeug (4) zu projizieren,
Aufnehmen des Lichtstrichs (10) von einem vom ersten Ort beabstandeten zweiten Ort entlang derselben Fahrbahnseite aus, und
Detektieren einer Radachse (2), sobald der aufgenommene Lichtstrich (10) in seinem von der genannten Fahrbahnseite ausgehenden Verlauf eine von seinem Verlauf bei leerer Fahrbahn abweichende versetzungslose Richtungsänderung (11) zeigt.

8. Verfahren nach Anspruch 7, **dadurch gekennzeichnet, daß** der Lichtstrich (10) steht und das Fahrzeug (4) bewegt wird.

9. Verfahren nach Anspruch 7, **dadurch gekennzeichnet, daß** das Fahrzeug (4) steht und der Lichtstrich (10) bewegt wird.

10. Verfahren nach einem der Ansprüche 7 bis 9, **dadurch gekennzeichnet, daß** mehrere parallele Lichtstriche (10) projiziert und aufgenommen werden, um mehrere Radachsen (2) gleichzeitig zu detektieren.

11. Verfahren nach Anspruch 10, **dadurch gekennzeichnet, daß** zusätzlich gitterförmig gekreuzte Lichtstriche (10) projiziert und aufgenommen, um daraus in an sich bekannter Weise die Oberflächenkontur des Fahrzeugs (4) zu ermitteln.

12. Verfahren nach einem der Ansprüche 7 bis 11, **dadurch gekennzeichnet, daß** es zur radachsenzahlabhängigen Vermautung der Fahrzeuge (4) eingesetzt wird.

## Claims

1. Device (1) for detecting wheel axles (2) of a vehicle (4) on a roadway (3), **characterised by** a sensor (5), which operates according to the light-section procedure and emits at least one fan of light (9) from a first location along the roadway (3) to project a line of light (10) onto the roadway (3) and a vehicle (4) possibly located thereon, and records this line of light (10) from a second location spaced apart from the first location along the same side of the roadway and detects a wheel axle (2) as soon as the recorded line of light (10) exhibits, in its course emanating from said side of the roadway, a shift-free change in direction (11) differing from its course when the roadway is empty.

2. Device according to claim 1, **characterised in that** the sensor (5) comprises a light projector (6) at the first location and a separately disposed camera (7) at the second location.

3. Device according to claim 2, **characterised in that** the light projector (6) is a laser or a light-emitting diode emitter, preferably in a narrow-band light frequency range, particularly preferred in the infrared or ultraviolet range.

4. Device according to claim 2 or 3, **characterised in that** the camera (7) is a traffic monitoring camera.

5. Device according to one of claims 1 to 4, **characterised in that** the sensor (5) projects and records multiple parallel lines of light (10) in order to detect multiple wheel axles (2) simultaneously.

6. Device according to claim 5, **characterised in that** the sensor additionally projects and records lines of light (10) crossed in a grid shape in order to determine the surface contour of the vehicle (4) therefrom in a manner known per se.

7. Method for detecting the wheel axles of a vehicle (4) on a roadway (3), with the steps:
projecting at least one fan of light (9) from a first location along the roadway (3) in order to project a line of light (10) onto the roadway (3) and a vehicle (4) possibly located thereon,
recording the line of light (10) from a second location spaced apart from the first location along the same side of the roadway, and
detecting a wheel axle (2) as soon as the recorded line of light (10) exhibits, in its course emanating from said side of the roadway, a shift-free change in direction (11) differing from its course when the roadway is empty.

8. Method according to claim 7, **characterised in that** the line of light (10) is stationary and the vehicle (4) is moving.

9. Method according to claim 7, **characterised in that** the vehicle (4) is stationary and the line of light (10) is moving.

10. Method according to one of claims 7 to 9, **characterised in that** multiple parallel lines of light (10) are projected and recorded in order to detect multiple wheel axles (2) simultaneously.

11. Method according to claim 10, **characterised in that** lines of light (10) crossed in a grid shape are additionally projected and recorded in order to determine the surface contour of the vehicle (4) therefrom in a manner known per se.

12. Method according to one of claims 7 to 11, **characterised in that** it is used for charging wheel axle number-dependent tolls for vehicles (4).

## Revendications

1. Dispositif (1) destiné à la détection d'essieux (2) d'un véhicule (4) sur une chaussée (3), **caractérisé par** un capteur (5) fonctionnant selon le procédé de coupe optique qui émet au moins un pinceau lumineux (9) depuis un premier endroit le long de la chaussée (3) afin de projeter une bande lumineuse (10) sur la chaussée (3) et un véhicule (4) se trouvant éventuellement dessus, et reçoit cette bande lumineuse (10) depuis un second endroit espacé du premier le long du même côté de chaussée et détecte un essieu (2), dès que la bande lumineuse (10) reçue montre, dans son allure partant du côté de la chaussée cité, une modification de direction (11) sans décalage divergeant de son allure lorsque la chaussée est vide.

2. Dispositif selon la revendication 1, **caractérisé en ce que** le capteur (5) comporte un projecteur lumineux (6) au premier endroit et une caméra (7) placée à part au second endroit.

3. Dispositif selon la revendication 2, **caractérisé en ce que** le projecteur lumineux (6) est un projecteur laser ou à diodes électroluminescentes, de préférence dans une gamme de fréquence de la lumière à bande étroite, de manière particulièrement préférée dans la plage infrarouge ou des ultraviolets.

4. Dispositif selon la revendication 2 ou 3, **caractérisé en ce que** la caméra (7) est une caméra de surveillance du trafic.

5. Dispositif selon l'une quelconque des revendications 1 à 4, **caractérisé en ce que** le capteur (5) projette et reçoit plusieurs bandes lumineuses (10) parallèles afin de détecter plusieurs essieux (2) en même temps.

6. Dispositif selon la revendication 5, **caractérisé en ce que** le capteur projette et reçoit des bandes lumineuses croisées en outre en forme de grille afin de déterminer à partir de celles-ci le contour de surface du véhicule (4) d'une manière connue en soi.

7. Procédé destiné à la détection d'essieux d'un véhicule (4) sur une chaussée (3), comportant les étapes suivantes :
projection d'au moins un pinceau lumineux (9) depuis un premier endroit le long de la chaussée (3) afin de projeter une bande lumineuse (10) sur la chaussée (3) et un véhicule (4) se trouvant éventuellement dessus,
réception de la bande lumineuse (10) depuis un second endroit espacé du premier le long du même côté de chaussée, et
détection d'un essieu (2) dès que la bande lumineuse (10) reçue montre, dans son allure partant du côté de la chaussée cité, une modification de direction sans décalage divergeant de son allure lorsque la chaussée est vide.

8. Procédé selon la revendication 7, **caractérisé en ce que** la bande lumineuse (10) est immobile et le véhicule (4) est déplacé.

9. Procédé selon la revendication 7, **caractérisé en ce que** le véhicule (4) est immobile et la bande lumineuse (10) est déplacée.

10. Procédé selon l'une quelconque des revendications 7 à 9, **caractérisé en ce que** plusieurs bandes lumineuses (10) parallèles sont projetées et reçues afin de détecter plusieurs essieux (2) en même temps.

11. Procédé selon la revendication 10, **caractérisé en ce que** des bandes lumineuses (10) croisées en outre en forme de grille sont projetées et reçues afin de déterminer à partir de celles-ci le contour de surface du véhicule (4) d'une manière connue en soi.

12. Procédé selon l'une quelconque des revendications 7 à 11, **caractérisé en ce qu'**il est utilisé afin d'ouvrir des voies de péage en fonction du nombre d'essieux pour les véhicules (4).
